# EUROPEAN PATENT APPLICATION

(11) **EP 2 194 456 A1**
(43) Date of publication of application: **09.06.2010**
(21) Application number: 08170860.4
(22) Date of filing: 05.12.2008
(51) Int. Cl.: G06F 9/54

(54) **Method and apparatus for performing a file operation**

(71) Applicant: NTT DoCoMo, Inc., Tokyo (JP)
(72) Inventor: Buechler, Matthias, 9403, Goldach (CH); Walter, Thomas, 80935, München (DE); Pretschner, Alexander, 8003, Zürich (CH); Harvan, Matus, 8057, Zürich (CH); Schaefer, Christian, 85764, Oberschleissheim (DE)
(74) Representative: Betten & Resch

(57) **Abstract**

A computer-implemented method for performing an operation on a file by an application program running on an operating system, wherein said file comprises a header where meta-information is stored and the actual file content, said method comprising:
calling a system call of said operating system by said application program to access said file;
intercepting said system call by an intercepting module;
reading the meta-information of said header by said intercepting module;
based on said meta-information, deciding whether said execution of said system call on said file is allowed or denied, and
if said determination results in said system call being allowed, moving the file pointer of the file to be accessed by an amount corresponding to said header so that the system call is executed on the actual file content.

## Description

### FIELD OF THE INVENTION

The present invention relates to a method and an apparatus for performing a file operation, in particular for performing a file operation in accordance with a policy defined by a header of the file.

### BACKGROUND OF THE INVENTION

The amount of sensitive and critical data is constantly increasing. Due to personal interests or because the law may ask for it, this data has to be protected against misuse. Protection in this sense has several meanings and implies different things.

Access Control mechanisms describe who has access to which data. It defines the set of privileged people who are authorised to access the data. What cannot be enforced by access control without dedicated technology is the future use of this data, although that does not mean that it is not important. Therefore one possibility is to extend the control over data by usage control mechanisms. Data protection e.g. is concerned with people's privacy and therefore controls the use of sensitive data.

In practice, the following example problem can be observed. Two competitive companies realise that it's better for them to cooperate in certain areas, but still stay competitive and independent from each other. For the cooperation they need to exchange valuable information but they do not want to do that in an uncontrolled way so that the other partner can do anything he wants with the data. The owner of such valuable information is only willing to hand in this information if he can exactly specify what the other party can do with the information. This could e.g. mean that the receiver should not be able to forward the received email to a third party, that he is not allowed to print the information or replay the mp3 file of a company meeting more than three times. In contrast to the past, such specifications should be enforceable by technical means, and not just by a signature on a piece of paper.

It would therefore be desirable to have a system which can enforce such restrictions or actions on information entities like files.

### SUMMARY OF THE INVENTION

According to one embodiment there is provided a computer-implemented method for performing an operation on a file by an application process running on an operating system, wherein said file comprises a header where meta-information is stored and the actual file content, said method comprising:
calling a system call of said operating system by said application program to access said file;
intercepting said system call by an intercepting module;
reading the meta-information of said header by said intercepting module;
based on said meta-information, deciding whether said execution of said system call on said file is allowed or denied, and
if said determination results in said system call being allowed, moving the file pointer of the file to be accessed by an amount corresponding to said header so that the system call is executed on the actual file content.

In this way the access to the file can be controlled or limited by a usage control policy which can be stored as meta-information in the file. The shifting or movement of the file pointer makes it possible that the file access is carried out transparently for the application process or application program running on the operating system. The application does not notice the interception and also does not notice the header, it is shielded from the application program. In this way a file handling policy can be stored as meta-information and can be enforced by the interceptor which - if necessary - denies or modifies the system call to enforce the policy. The movement of the file pointer in an embodiment is done inside the kernel. This means that this operation is "shielded" from the access by the application program or application process.

According to one embodiment the meta-information contains information about a policy which should be enforced when accessing the file, wherein said policy may comprise on or more of the following:
a definition of one or more conditions under which the file may be accessed by the system call in an unmodified way;
a definition of one or more conditions under which the file may be accessed not at all by the system call; and/or
a definition of one or more conditions under which the file may be accessed only in a modified manner.

In this way the meta-information can define the actual policy to be enforced when accessing the file, such as under which conditions an access should be denied, allowed, or allowed to be executed in a modified way.

According to one embodiment the execution of the system call is performed in a modified manner, wherein said modified execution comprises to encrypt or to decrypt the actual file content.

This enables an automatic encryption and/or decryption of the file to be performed in a way which is transparent for the application process. If the policy defines that the application program is allowed access to the encrypted file, then the modification of the system call leads to an automatic decryption of the actual file content so that the application can access the actual data in an unencrypted form. On the other hand, for those applications where the policy does not allow decryption, the files cannot be accessed in decrypted form, and for such applications only encrypted files are visible.

According to one embodiment said decision whether the execution of said system call is allowed or denied is not only based on said meta-information but also based on the kind of application program or application process from which the system call originated. For example, in one embodiment the meta-information contains information as to whether for a certain application program (or a kind of application program or application process) the system call is allowed or denied. Whether for a certain application program a system call is allowed or denied may in one embodiment form part of a policy which is defined in the meta-information.

This makes it possible to allow or deny the execution of the file operation depending on the type of application process which requested the system call. The policy may e.g. specify certain application processes which are authorised to access the file by the system call and further it may specify application programs or processes which are denied to access the file. For example a certain application process like attaching the file to an email or printing the file may be denied, or a certain application program like a word processor may be granted or denied access to the file.

According to one embodiment said file comprises as actual file content encrypted data, and said meta-information comprises usage control policy defining one or more conditions under which said encrypted data is allowed to be decrypted. In one embodiment the meta-information may further comprise one or more cryptographic keys for decrypting said encrypted data. The conditions under which the encrypted file is to be decrypted thereby allowing access to the decrypted content could e.g. specify one or more applications programs or processes which are allowed access to the decrypted content. Also there could be defined application programs which are denied access to the decrypted content. Dependent on the definition of such conditions it may be decided whether the decryption is performed or not, thereby either allowing or denying access to the decrypted content. More generally, the conditions may define a usage control policy which defines under which conditions a decryption is performed, thereby defining under which conditions an access to the unencrypted content is allowed to the application program which requested the system call.

In this way an automatic encryption or decryption can be achieved, where only if the usage control policy allows for it the data may be decrypted using the one or more keys in the meta-information. If the decryption is not allowed, the data remains encrypted for the application program trying to access it, because the key necessary for decryption are protected by being stored in the header which can only be access by the interceptor.

In one embodiment the meta-information may not only define whether the decryption is to be performed but also how the decryption is to be performed. This may e.g. include an identification of the encryption algorithm to be used. It may also include e.g. a pointer or a reference to a key to be used for decryption or some indication how to obtain such a key. The information how to obtain a key may e.g. include the identification of an algorithm which should be run based on a seed value to thereby obtain the key.

According to one embodiment said meta-information comprises one or more cryptographic keys for decrypting said encrypted data (the actual file content) or it may contain information based on which said one or more keys for decrypting said encrypted data can be derived.

Storing the one or more keys in the meta-information enables the file decryption based on the stored meta-information also on other computers.

According to a further embodiment the key is not stored in the header but is for example managed by some other entity like for example a key management program.

According to one embodiment said meta-information is stored in encrypted form. This makes it possible that the decryption can only be performed by a system which is capable to decrypt the meta-information. Since the interceptor module may be equipped with the capability and the key to do this and other "normal" operating systems are not, the file content and the meta-information remains protected even if a "normal" operating system can read it, because the content remains encrypted.

According to one embodiment said intercepting module is capable of decrypting the encrypted meta-information. This enables the decryption of the meta-information and of the actual file content by the embodiment of the invention but not by other normal systems.

According to one embodiment said file contains information which identifies it as being a file which comprises said header with meta-information in addition to its actual file content.

This enables the embodiment of the invention to recognise that the file is a "container file" and that it has to be handled appropriately, i.e. by reading the meta-information and enforcing the policy stored therein, and further by moving the file pointer by an amount corresponding to the header size.

According to one embodiment the interceptor module has two components, one being an intercepting component for intercepting the system call, and another one for carrying out any modifications of the system call or its arguments (a "data handier"), for example for performing an encryption of the data to which the system call relates. While the first component in one embodiment is implemented in the kernel space, the second component may in one embodiment be implemented in the user space to enable the use of libraries and programs of the user space. In such a case the system call and its parameters have to be forwarded from the first component to the second component. Since the second component is acting in the user space, it may however not be possible for the second component to directly access the data to which the system call of the application relates in the buffer of the application because one user space application usually is blocked from directly accessing the data of another one. For this reason the data may in one embodiment be copied and the new pointer to the copied data is then forwarded to the second component (which may perform the encryption) so that it can be accessed by the second component of the intercepting module.

According to a further embodiment the intercepting module is completely operating in the kernel space and has an interface through which it receives the system calls from application programs to intercept them.

According to one embodiment there is provided a computer-implemented method for performing a write operation to create a file by an application program running on an operating system, wherein said file comprises a header where meta-information is stored and the actual file content, said method comprising:
calling a system call of said operating system by said application program to create
said file by writing its data into a storage;
intercepting said system call by an intercepting module;
writing the meta-information of said header by said intercepting module into said storage to thereby enable said intercepting module to decide based on said meta-information in case of a later system call on said file whether said execution of said system call on said file is allowed or denied, and
moving the file pointer of the file to be written by an amount corresponding to said header so that the write operation of said actual file content is performed in said file after said header.

In this way a write operation according to an embodiment of the invention may be implemented where a file is created by a process which is performed transparently for an application by writing the data into the file after a header has been written.

The write operation may further comprise any of the features of the other embodiments described before.

According to one embodiment there is provided an apparatus for performing an operation on a file by an application program running on an operating system, wherein said file comprises a header where meta-information is stored and the actual file content, said apparatus comprising:
a module for receiving system call of said operating system from said application program to access said file;
a module for intercepting said system call by an intercepting module;
a module for reading the meta-information of said header by said intercepting module;
a module for, based on said meta-information, deciding whether said execution of said system call on said file is allowed or denied, and
if said determination results in said system call being allowed, for moving the file pointer of the file to be accessed by an amount corresponding to said header so that the system call is executed on the actual file content.

In this way an apparatus according to an embodiment of the invention may be implemented.

According to one embodiment there is provided an apparatus for performing a write operation to create a file by an application program running on an operating system, wherein said file comprises a header where meta-information is stored and the actual file content, said method comprising:
calling a system call of said operating system by said application program to create said file by writing its data into a storage;
intercepting said system call by an intercepting module;
writing the meta-information of said header by said intercepting module into said storage to thereby enable said intercepting module to decide based on said meta-information in case of a later system call on said file whether said execution of said system call on said file is allowed or denied, and
moving the file pointer of the file to be written by an amount corresponding to said header so that the write operation of said actual file content is performed in said file after said header.

In this way an apparatus according to a further embodiment of the invention may be implemented.

The apparatuses according to embodiments of the invention may further comprise modules or means to implement the features of the previously described embodiments.

According to one embodiment there is provided a computer program comprising computer program code which when being executed on a computer enables said computer to carry out a method according to one of the embodiments of the invention.

### DESCRIPTION OF THE DRAWINGS

Fig. 1 schematically illustrates a first embodiment of the invention.
Fig. 2 schematically illustrates a further embodiment of the invention.
Fig. 3 schematically illustrates a flowchart according to an embodiment of the invention.
Fig. 4 schematically illustrates the systrace framework.
Fig. 5 schematically illustrates the components of a further embodiment of the invention.
Fig. 6 schematically illustrates a sequence diagram of a further embodiment of the invention.
Figs. 7 and 8 schematically illustrate file structures according to embodiments of the invention.
Figs. 9 schematically illustrate file operations according to an embodiment of the invention.

### DETAILED DESCRIPTION

Before describing embodiments of the invention, at first some terms are explained which are used in the following description.

**System Call** is a mechanism for a user space application to request services or access protected resources provided by the Kernel, like disc drives, network connections, ... These services are implemented by a set of privileged functions in kernel space that the application in user space is not allowed to invoke directly. The application has to tell the Kernel to invoke these functions by using the appropriate system call.
**System Call Interposition** is a mechanism allowing to intercept invoked system calls, deny their execution or modify their arguments..
**Access Control** consists of mechanisms and services in the area of authentication, authorisation and audit. In the Access Control Model, subjects can perform certain actions on objects. The permissions are specified by Access Control Techniques which can be categorised into three major parts, namely Discretionary, Mandatory, and Role Based Access Control.
**Usage Control** extends access control by providing mechanisms to specify requirements what has to happen to the data whenever it has been released to third parties. Usually the permitted operations are described by a policy, e.g. that a file can just be printed twice or that an email cannot be forwarded to anyone else.
**Managed Information** is data in the context of usage control. A policy is assigned to the piece of information which determines the requirements of that data. Managed information is therefore the tuple consisting of the data and the policy: managed information = data× policy.
**Traced Application** A traced application is an application that runs within a framework according to an embodiment of the invention. The applications is sandboxed and is executed under the supervision of a handler that controls the application's behaviour.

According to one embodiment there is provided a mechanism where a certain restriction or policy on the handling of data can be enforced. E.g. the provider of information has an interest to control the flow of his information and enforce certain actions in specific situations. This kind of controlled release of information may be called usage control of managed information because information has left the control area of the provider and is transferred to someone else.

According to one embodiment this can be achieved by introducing a mechanism which works on the operating system layer or adds an additional layer to the operating system so that the enforcement works system wide.

In one embodiment there is provided an intercepting module which intercepts system calls from an application before they are directed to operating on a file, e.g. on a hard disk or any storage such as a buffer or any storage medium. The interceptor is capable to intercept such system calls before they are executed on the data. The module then enforces a policy or a required restriction on the handling of the data (such as encryption or decryption) and then further forwards the system call to be executed on the target data.

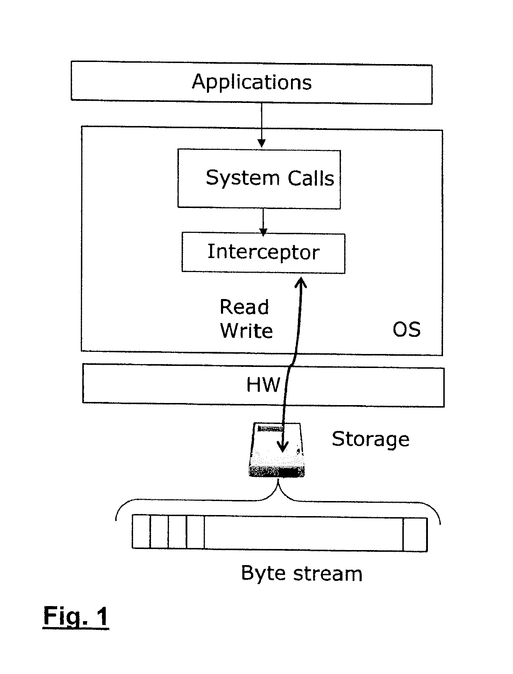

This is schematically illustrated in Fig. 1 where the interceptor module is located in the operating system layer, in other words between the application layer and the actual hardware (HW) storing the target data. The application on top of the operating system may wish to access the data on the target storage medium (e.g. a hard disk). The intended access may e.g. be a read or a write operation.

In such a situation the application requests the data write operation or read operation to the operating system (OS) by a so-called system call. A system call is the mechanism used by an application program to request services from the operating system or the kernel of the operating system. The operating system then executes the system call under its own regime without further control by the application program. In other words, the program which made the system call does not have the required permissions to execute the (data write or read) operation in its own flow of execution. System calls provide the interface between a process and the kernel, and they provide the execution of a service on a privileged level where the application or process which called the system call has no right to execute the called service by itself. The OS executes at the highest level of privilege (or at least at a higher level of privilege than the application processes or applications) and allows the applications to request services via system calls.

According to one embodiment there is now provided a mechanism which intercepts such a system call so that it can be modified or executed in a modified way, or in some way which goes beyond what the application program would expect to be executed when it makes a system call to the operating system. In this way the byte stream shown in Fig. 1 can be read or written in a modified way by modifying the execution of the system call through the intercepting module.

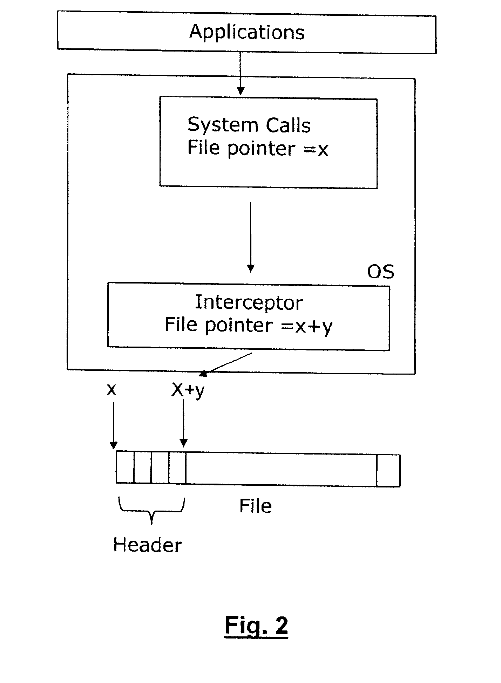

According to one embodiment the system call is directed to operate on a file. One modification which is then carried out by the intercepting module (the interceptor) will now be explained in connection with Fig. 2.

The interceptor receives a system call which should operate on a file, and to identify the location where the file (and the operation) should start, there is provided a file pointer together with the system call. In Fig. 2 the file pointer is assumed to be a value x. The interceptor module now modifies the file pointer by adding a value y so that the file pointer is x+y. This has the following effect.

When operating on the file the file operation does not start at the actual start location x of the file, instead the operation starts on a location x+y which is located after the actual start position of the file. This means that a "header" as illustrated in Fig. 2 which is located at the beginning of the file is not accessed by the normal file operation which starts only at the location x+y, i.e. at a location after the header.

In this way there is provided a part of the file (the header) which is not accessible by the application which requested the system call. The header is therefore transparent for the application program which requested the system call, it is "protected" or "shielded" from the application program. This is because the application program cannot influence the way how the system call operates because due to the lower privilege of the application compared to the operating system the system call execution is beyond the reach of the application program which called the system call.

As can be seen from Fig. 2, the mechanism in one embodiment uses a specific type of files, namely a file which comprises a header (at the start of the file) which contains meta-information and the actual file data (the "payload"). Such a file having this kind of structure may in the following be referred to as "container file". The size of the header corresponds to the amount by which the interceptor module shifts the file pointer when accessing the file to perform the operation requested by the application program (in Fig. 2 this amount is y). In this way the file header is "transparent" for the application and shielded from the application program.

It therefore should be noted that in one embodiment the file on which an intercepted system call operates is a "container file" having a header and a normal file content, and that the interceptor gives access to the normal file content by shifting the file pointer by an amount corresponding to the size of the header to operate on the normal file content (the payload) in a manner which is transparent for the application program. After completing the file operation the file pointer may be shifted back again by the same amount.

However, while the header is not accessible for an application program, it is accessible for the interceptor module (or any other module provided at the operating system level), and the interceptor module can then read the header which may contain meta-information about which kind of restrictions or rules or policies should be applied when reading or writing the file. The meta-information in one embodiment contains information about a policy which should be enforced when accessing the file. This means for example it may contain definitions of one or more conditions under which the file may be accessed by the system call in an unmodified way. It may further contain definitions of one or more conditions under which the file may be accessed not at all by the system call, and/or further it may contain definitions of one or more conditions under which the file may be accessed only in a modified manner, for example by performing an additional operation on the actual file data, such as encryption or decryption.

For this reason the interceptor in one embodiment may comprise a module or component (e.g. a decision module or enforcement module) which reads the header of the file, and based on the content of the header the interceptor may then decide and enforce a policy for the handling of the file. Enforcing a policy can mean e.g. that a certain operation on the file is allowed, or that it is denied, or that it is modified. A modification of the operation could e.g. consist in the addition of an encryption or decryption operation. This could result in the file being encrypted before it is written, or it could be decrypted after it is read.

According to one embodiment the enforcement of the policy could not only be based on the content of the header, but additionally or alternatively it may depend on the type of application program which requests the system call. The header may for example contain information stating that only a certain application (e.g. MS Word) should be allowed to read the file, and then the interceptor (or the decision module) identifies which kind of application has requested the system call, and if it was not MS-Word, the access is denied.

Such kind of policies which may be stated in the header can be relatively specific, e.g. it may involve a definition in the header that a file can be opened e.g. by MS-Word, but it is not allowed to attach it as an attachment to an email. In this case, if the interceptor recognises that the system call is based on an application program which wants to attach the file to an email, this operation will be denied.

This can be implemented by using the process identifier (PID) of the process which requested the system call. In the operating system there is maintained a mapping between a process ID and its corresponding application program, and if the policy in the meta-information states the application program and whether it is granted or denied access, reference can then be made to this mapping based on the process ID which is handed over to the operating system together with the system call.

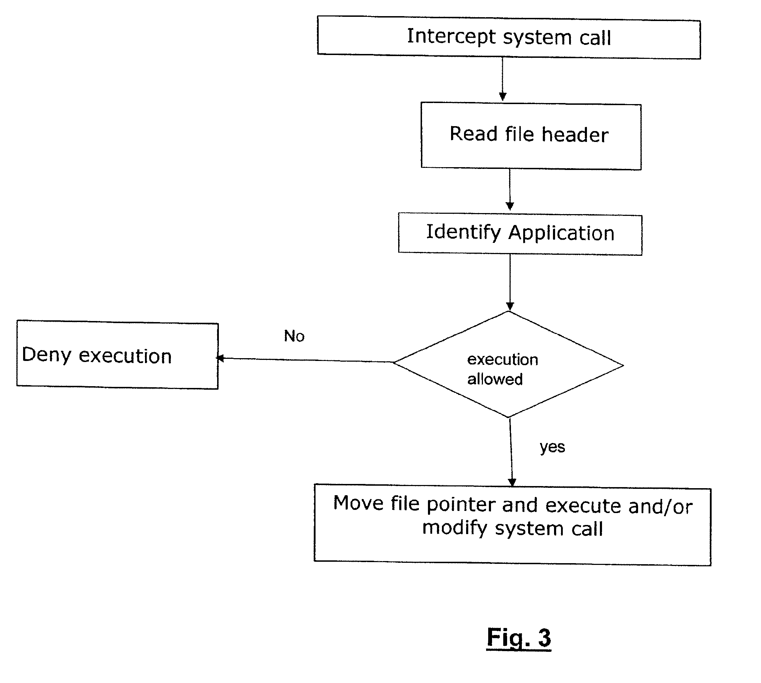

Fig. 3 shows a flowchart which illustrates the operation of such an embodiment. At first the system call is intercepted. Then the file header of the container file is read, and optionally also the application is identified from which the system call comes. This information is then used in a decision process where a policy (e.g. a usage-control policy) is enforced based on this information to determine whether the system call execution is allowed or not. This may also include a determination that the system call is allowed but has to be modified for execution, e.g. by additionally performing an encryption or decryption on the payload data.

If the decision is made that the execution is allowed, the flow proceeds by moving the file pointer ahead by the amount of the header and then executing the system call, either modified or unmodified, on the file data which follows after the header. If the decision is made that based on the policy which should be enforced the execution of the system call should be denied, the flow proceeds with denying the execution. This may include the display of an error message or a "silent denial" without an error message.

On the other hand, it is also possible in one embodiment that the file pointer is not moved and that the application gets the file in an unmodified way including the meta-information. This is e.g. useful if the file is to be sent to another system without modification (in a protected way) so that the system to which the file is sent receives it completely, including the meta-information.

Another option would be that the decision process leads to the result that the execution of the system call needs some further information, such as e.g. the input of a code by a user. In this case the flow may proceed by prompting a corresponding user input, and if a subsequent check is determining that the correct data was input by the user, the flow proceeds with executing the system call on the file, possibly using the information from the user, e.g. for encrypting or decrypting the data if the information from the user was a necessary key needed for encryption or decryption.

According to one embodiment the system provides for automatic encryption and decryption of data. In one embodiment, files which are written to a data storage are automatically encrypted. This means that the modification of a system call which is performed by the interceptor module in case of a write operation provides for an encryption of the actual file data before it is written, and then when the data is written to the storage medium it is written in encrypted form together with the header. The automatic encryption of the actual file content protects it from unauthorised access. The meta-information or the policy defined in the header can define under which condition decryption of the file is allowed. For example there may be stated that an application program of a certain type may have access to the decrypted file, and in this case the system call originating from this application may be modified such that the actual data is decrypted before it is returned to the application program. On the other hand, if the calling application program is not defined in the meta-information as being allowed access, the decryption is not performed and the data cannot be accessed in decrypted form.

It will be understood that the writing and reading operations to some extent can be regarded as symmetrical, i.e. a writing of a file in one embodiment is done such that the header and then the actual file content are written together into one file to create the container file. The header then defines the policy for handling the file. According to one embodiment all files which are written are container files, according to another embodiment only some of the written files are container files. Whether a write operation creates a container file or a "normal" file may also be defined in some policy which is set for the interceptor module. For example for certain applications it may be stated that all write operations performed by these applications should create container files. For others there may be defined that normal files may be generated.

According to one embodiment the meta-information in the header may contain a key or some data or information (such as a key generator or an initial value for a key generator) which can be used to obtain or derive a key necessary to decrypt the actual file content. This information was written into the header when the file was stored in the storage medium. In such a case the information which is necessary to decrypt the file can be transported over the boundary of a certain machine or computer to another machine, and while still the file itself remains protected the other machine can access the decrypted file if its operating system has an interceptor module which can read and interpret the header and the actual file content.

According to one embodiment the key or data to obtain a key which is contained in the header is also encrypted. The decryption of the header is then e.g. only possible for an operating system which has an intercepting module according to an embodiment of the invention and which has the necessary key to decrypt the header information. The key for decrypting the header may e.g. be a master key which is available to all operating systems having interceptor modules according to an embodiment of the invention. Then different keys may be used to encrypt actual file data of different files, and these different keys may be stored in encrypted form in the headers of the respective container files. The master key of an interceptor module according to an embodiment of the invention can then decrypt such keys stored in the header, and the decrypted key may then be used to decrypt the actual file content. Other operating systems not having such a component (and such a master key) may be able to read the header but cannot decrypt it, and if the header contains the key necessary to decrypt the actual file data then an operating system which cannot decrypt the header can also not decrypt the actual file data. In this way the container file in combination with the interceptor module can achieve a protection of the file content over different machines, computers and operating systems. In other words, the file policy is enforced and the file still protected while the file is "portable",

The embodiments described before achieve the goal to deal with the protection of managed information. The concept of container file is used to enforce a certain policy, e.g. to encrypt and store managed information in the file system. The proposed approach has several advantages as follows.

First, the policy enforcement (e.g. File encryption of a file) is performed transparently to applications. I.e. whenever an application is reading and writing data from or to a file the data is being encrypted and decrypted, respectively. This handling of data in the container file is done at the operating system level and not triggered or done by the application. Thus, any application can benefit from the invention without being adapted and re-compiled. Second, encryption can be done selectively for certain files only. I.e. policies might be defined that request the encryption of data in a file. The binding of policies to files is done using the container file. This binding is transparent for any application and independent of any application. Furthermore, if transferred to another system the binding of policy and file is not changed thus the data is being protected in the container file across systems.

Third, file encryption is better than another approach which might use file system encryption because of the following: First of all, file system encryption just ensures that data stored on the partition is encrypted. Any application gets access to decrypted data (after successful authorisation of the user). In the present approach, however, access to decrypted data in the container file can be made application dependent (without modification of the application) and policy-driven. Secondly, usually there exists just one key for the whole disk. It makes sense that different files are encrypted with different keys to increase security, which is possible by the proposed mechanism. Thirdly there is the aspect of usability. It would make it very inconvenient if a third party that wants to receive valuable information protected by a policy first has to prepare an encrypted disk. This is definitely too much overhead.

The container file is a concept that can be supported by any operating system such as Linux, Windows, Symbian and Windows Mobile, as long as there is provided an interceptor having the operational characteristics as described before, namely how it is dealt with when reading and writing to the container file. The proposed embodiment uses system call interposition in order to deal with the reading and writing and the manipulation of input as well as output parameters. System call interposition is a concept that can be used with the above mentioned operating systems. Thus, the proposed solution can be implemented on various systems and spans from systems and desktops to mobile phones.

According to one embodiment the proposed mechanism deals with controlling managed information, i.e. any information that comprises a secret (e.g. personal data, company secret) and therefore is to be protected. Specifically, the embodiment may deal with the protection of the information by encrypting the information. Encryption in one embodiment is done transparently to the user as well as the application processing the information. It is transparent to the user because policies are being defined which identify managed information and how the managed information is to be dealt with. It is transparent to the application as the enforcement of the policies is done at the operating system level.

Technically, one may consider the situation that additional meta-information is stored whenever a new file is created by an application. This meta-information can be used for instance to encode a policy or a classification of the file and is stored at the beginning of the file, whereas the rest of the file stores the usual file content. Such a file that consists of a protected area at the beginning and a second area that stores the file content is called a *container file*.

The invention according to an embodiment can be readily used in the context of access and usage control. It proposes a control mechanism to enforce access and usage policies. Because of the implementation of the control mechanism at the operating system level any application accessing and using the data is required to run on top of an operating system that runs the control mechanism. Furthermore, usage control is enforced because the data provider can protect the data by encrypting the data before the data is released to any third party, i.e. data consumer. Again, the data consumer can readily access and use the data only if the data consumer's system does support the control mechanism.

In the following there will be described further embodiments of the invention in somewhat more detail.

According to one embodiment there is used an existing framework which can handle system call interception and which is somewhat modified to implement an embodiment of the invention.

One such framework which can be used is Systrace (see Niels Provos, Improving host security with system call policies. In SSYM'03: Proceedings of the 12th conference on USENIX Security Symposium, pages 18-18, Berkeley, CA, USA, 2003. USENIX Association). According to one embodiment the Systrace framework is used for implementing the mechanism of file handling.

In the following there will now be described embodiments which implement the interceptor module and its operation as described in the previous embodiments by using the Systrace framework. It will be understood that this is just one possible option for implementation, and other frameworks may be used as well if they achieve the same functionality.

Systrace is one of a whole set of system call frameworks that implements the previously introduced system call interposition or interception. Systrace is a computer security utility whose main focus is on enforcing security policies for certain applications on the basis of system call interposition. In principle Systrace intercepts the application's system calls and compares them to the given policy. Therefore Systrace puts the traced application into a kind of sandbox and observes its behaviour in the first place. In order to increase the whole system security Systrace controls the invoked system calls too. A classical example mentioned on the website of Systrace is a web server. A web server has primarily the responsibility to publish predefined documents on the Internet but there is no scenario that the web server should have access to files in directories like /etc, /usr, ... The Systrace framework can now be used to restrict the web server's capabilities to access files in directories the web server doesn't need to in order to fulfil its primary tasks. A Systrace policy describes exactly, which files should be accessible by the web server and which accesses should be denied. Whenever the web server invokes a system call where one or more parameters reference files in protected areas, Systrace prevents the execution of this system call. This approach eliminates the risk that an attacker has access to files the web server is not intended to publish using e.g. buffer overflows. This is possible because the majority of attacks happen above the level of system calls in the abstraction hierarchy so that the attack itself needs system calls to work.

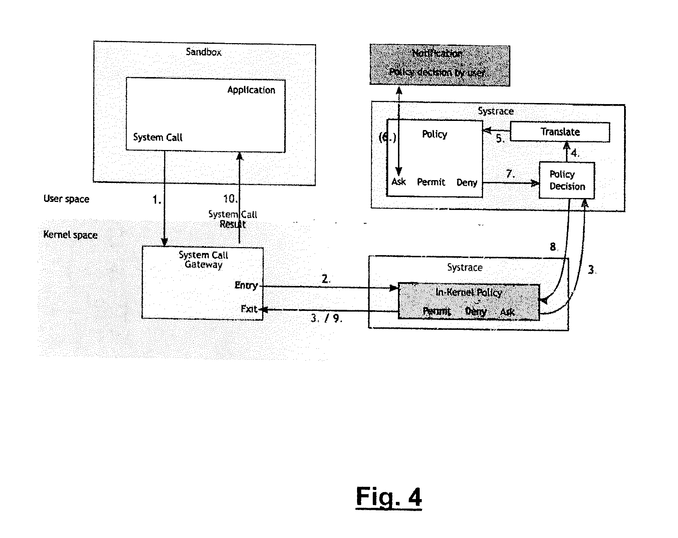

The Systrace's architecture is illustrated in Fig. 4.

As fig. 4 shows the Systrace architecture consists of two parts, one in the kernel space and the other in the user space.

### The Kernel Space Part

The Systrace kernel space part has two main functionalities. First of all, it hooks in at the control flow point where system calls are invoked and then implements the potential forwarding of system calls to the user space. The second important functionality is the In-Kernel policy. This mechanism is called fast path evaluation that is needed for system calls that should always be allowed or denied. The fast path evaluation was introduced due to performance reasons because if a system call is permitted according to the In-Kernel policy, the system call is not redirected to user space but executed as normal. The introduced overhead is therefore as small as possible because a redirection to user space only takes place if the In-Kernel policy cannot decide if the system call should be permitted or denied.

### User Space Part

If the In-Kernel policy cannot decide, if a system call is permitted or denied, the Systrace Kernel part forwards the system call to the user space. This automatically leads to a context switch and has some influence on the performance. The semantic of such a forwarded system call is that the user space daemon should be asked whether the system call should be permitted or not. The user space daemon has a deeper look at the system call by observing the system call arguments, too (compared to the In-Kernel part that only considers the system call in itself without possible arguments). When the security policy has an appropriate entry, the system call can be allowed or denied without user interaction. If this automatic evaluation is not possible or the Systrace policy explicitly enforces it, the user of the running application has to be asked. This is done by a popup window that provides some information about the system call and the possibility to permit or deny the system call.
To increase security even more, the user space daemon is monitoring the application permanently. E.g. the user space daemon is getting informed whenever the process changes its state. By doing so the daemon knows when the monitored process forks itself, terminates, changes the uid or pid and so on.

Forwarding the system call to the user space may involve copying the data to which the system call relates to a new location in the memory, and the pointer to the new location is then also forwarded to the component acting in the user space. This is because it may not be possible for the second component to directly access the data to which the system call of the application relates in the buffer of the application because one user space application usually is blocked from directly accessing the data of another one. For this reason the data may in one embodiment be copied and the new pointer to the copied data is then forwarded to the component acting in the user space (which may then also perform the encryption) so that it can be accessed by the component acting in the user space.

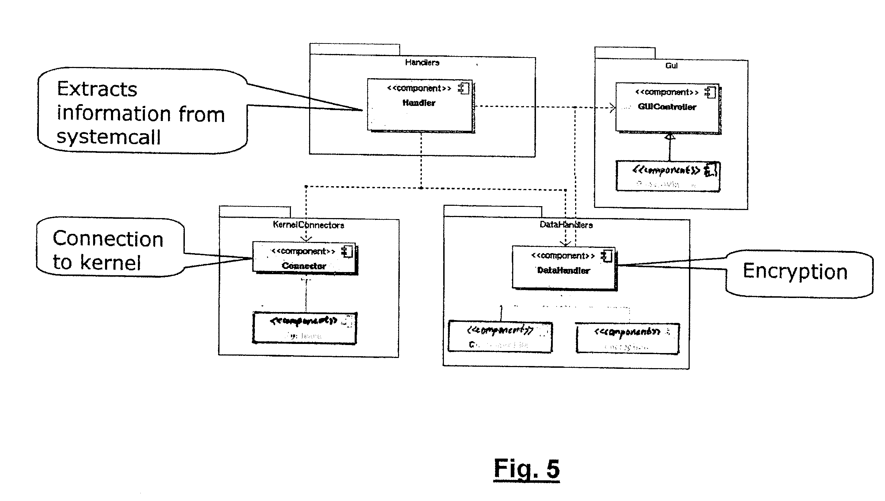

The Systrace module is now used to implement an embodiment described in the following. Fig. 5 schematically illustrates the overall structure of this embodiment.

The overall architecture consists of 4 modules, each of them with a different responsibility. Altogether form the "interceptor" of the previous embodiments.

The idea behind this modular architecture is flexibility, although the individual modules may also be combined into a single one.

However, in order not be too specific and applicable in just one special situation but rather be a framework that allows to be applied in many different scenarios. Due to that flexibility, in one embodiment the following four main packages can be distinguished. The Handler is the centre of the architecture and is the main controller. To do its job, it has access to three other components, namely to a KernelConnector, a DataHandler, and (optionally) a GUI component.

The KernelConnector is responsible for the connection between the Handler and the Kernel. In the specific embodiment, the KernelConnector uses the API of the Systrace framework. If one wanted to exchange the underlying framework or move the framework to another system that doesn't support Systrace but a different one, only the KernelConnector would have to be updated. This is the reason why the KernelConnector can be instantiated as shown in Fig. 5. All the other components are not influenced by the choice of the underlying framework.

The Handler is responsible for extracting all the information from the invoked system call. To further increase the flexibility, not the Handler itself modifies the arguments or reacts on behalf of the invoked system call but rather a separate DataHandler. That means that the Handler forwards the information to the DataHandler and gets the modifications back. After getting the information back, the Handler is responsible for overwriting the original system call arguments by the modified ones.

The DataHandler has the responsibility to decide what should happen to the data. Because the DataHandler in one embodiment runs in user space it has the most possible freedom in modifying the data because it has access to any further libraries that are available.

The last module is the GUI component. In some situations the framework may not be able to process all data fully automatically. Sometimes the user of an application has to provide missing data like meta-information about a special file, and so on. The GUI part is a separate component of the architecture according to one embodiment and can be instantiated in different ways, from a simple popup window to a complex database query. Because thousands of other data resources exist they could theoretically all be used in such a framework. Therefore the GUI component acts as an interface between the framework and the data source for missing information.

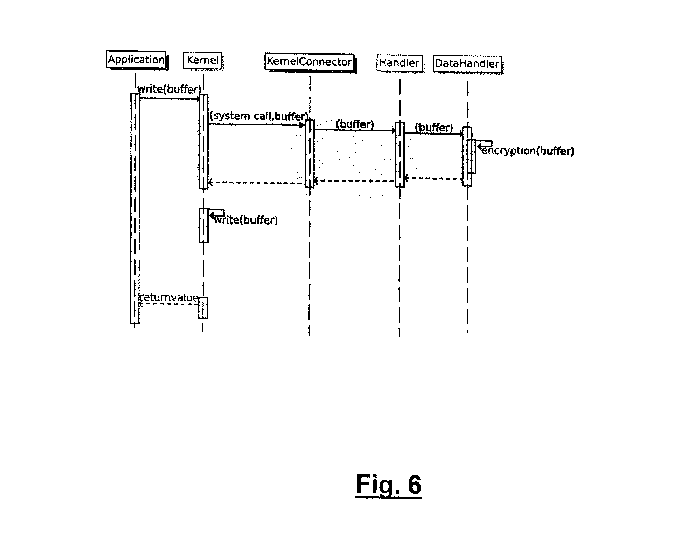

A very simple example illustrates the interaction between the different components. In this example, every buffer that is written by a write() system call has to be encrypted. That means, as illustrated in Fig. 6, that the KernelConnector receives the information about the system call and the buffer from the Kernel and forwards the buffer to the Handler. Because the Handler is not responsible for modifying the buffer, it forwards the buffer to the DataHandler that encrypts the data. When the Handler has replaced the original plaintext buffer by the encrypted one, the Kernel executes the write() system call so that the modified buffer is written instead of the original one. Fig. 6 shows the corresponding sequence diagram for this simple example.

The architecture of the framework is given by the component diagram shown in Fig. 5. It should be noted that the KernelConnector, the DataHandler, and GUI component allow being instantiated to make them suitable for a specific situation. The specific solution is the container file mentioned previously for managed information. The container separates between the file content and the applicable policy or classification but combines both in one physical file being stored (possibly encrypted) in the file system.

With this architecture there can be implemented a system that allows to intercept read() and write() system calls, and also to perform the decryption and encryption of data to be read from a file or written to a file. Furthermore there is implemented a file structure, the *container file*, which binds encrypted data (i.e. file content) to meta-information. Meta-information may comprise, for instance, a usage control policy as well as cryptographic keys. The encryption and decryption of the file content, when a write() or read() system call is done, is transparent to the application that invokes mentioned system calls.

According to one embodiment the container file can be identified as being a container file by a certain identifier, which may e.g. be located at the beginning of the container file. This may e.g. be a unique "magic number" which identifies the container file as container file. To reduce the likelihood that a non-container file has by chance the magic number at its beginning, a more complicated identifier could be used, e.g. a checksum calculated over the header being used as magic number. To identify the container file it would then, however be necessary to always calculate the checksum and to check whether it is located correctly as magic number at the beginning of the file.

If the file is identified as container file, the intercepting module will treat it as container file, i.e. by moving the file pointer and reading the header to enforce the policy. If it is not a container file it may be treated as normal file.

The determination whether a file is a container file or not could, however, also be done in other ways. One way could be to define certain filenames as container filenames, to collect them in a list, and all the files having such a filename which is in the list will then be treated as container files.

### Move Filepointer

Now the functionality of moving the application's file pointer according to one embodiment is explained. As mentioned before this is added as a new functionality to the Systrace Kernel module. This functionality is used several times by the Handler in different situations. Whenever it wants to provide transparency, or wants to write or read from a location different from the location the application positioned the file pointer to, the Handler invokes the function moveFilepointer() to reposition the file pointer. The function takes the PID of the traced process, the file pointer it wants to move and the offset as parameters, and sends this structure via an ioctl() command to the underlying framework. As usual for file pointer moving functions, the return value is the new current file pointer position.

### PopupWindow as a GUI Component

The GUI interface is an optional component. In a simple embodiment this component is a simple popup window that allows to enter some data, e.g. four integer values. In one embodiment, whenever the application opens a container file that does not store the metadata header yet, the user of the application will see a popup window to fill in the missing data as meta-information. Afterwards this information is stored in the header of the container file.

According to a further embodiment a missing key for decryption or encryption may be requested to be inputted by the user.

### Container Files as a DataHandler

The DataHandler can be instantiated in many different ways. In this section, there will be considered the situation that additional meta-information has to be stored whenever a new file is created by an application. This meta-information can be used for instance to encode a policy or a classification of the file and is stored at the beginning of the file, whereas the rest of the file stores the usual file content. Such a file that consists of a protected area at the beginning and a second area that stores the file content is called a *container file*.

Container files among other reasons make sense because of the following two characteristics:
1. It should be as easy as possible to handle policy protected files. It is desirable to avoid the situation where managed information is split into two or more different files. Therefore storing the policy in one file and the file content in another file is inconvenient compared to just have one single file. The easiest way is therefore to just handle one file.
2. If the policy and the file content are separated, one has to link the policy and the file content somehow that it is not possible to exchange the policy. Just writing the policy and the file content into the same file does not solve the problem at all but it makes the handling easier than dealing with two different files.

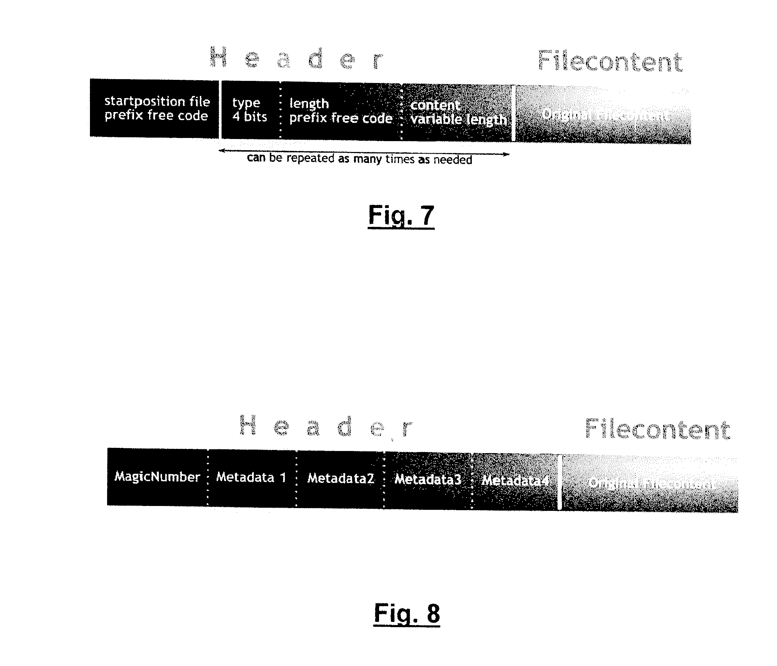

The question what managed data is and how managed data is handled, can now be answered in the following way. Managed data can be regarded as an abstraction of a container file. This special file consists of two different areas, the header and the file content, as shown in Figures 7 or 8.

Fig. 7 shows a contained file where the header has a flexible length. After a prefix free code there follows a type definition and then a definition of the header length and the actual header content which may define the usage control policy or the classification of the file. Then follows the actual or original file content.

A more simple example of a container file is shown in Fig. 8.

In this embodiment the header is divided into five different fields. The first one is a MagicNumber that is used to distinguish the header from file content. Another idea is to calculate a checksum over the four metadata fields and to store the checksum as MagicNumber in the first field. Due to performance reasons and because the header will be encrypted later, however, one may conclude that a static MagicNumber is enough to recognise a header.

The last four fields store metadata. In one embodiment each of the fields stores an integer value. Individually or together they may define a policy which defines the way how the file access has to be handled, e.g. which applications are allowed to access the file, if encryption or decryption is to be performed, etc. The header may also comprise one or more keys to be used for encrypting or decrypting the actual file content.

The semantic of the header can be defined depending on the specific embodiment and the Handler should be implemented in some proper way in order to react properly on the metadata.

From a security point of view, one could ask the question if an attacker has the possibility to prepare e.g. the data to be written by a write() system call in such a way, that the header can be overwritten. If such a weakness exists, an attacker could have the possibility to override the header with his own policy. The following observation shows, that this attack is not possible via a specially prepared write() system call.

A file pointer cannot have a negative file position. That means, that the file pointer points at least at the beginning of the file or within a file, but never to a position before the file.

The file pointer of the application does not know anything about a header in the file and therefore assumes, that the file content begins at position 0 of the file. If the application wants e.g. write some data right at the beginning of the file, it moves the file pointer at position 0 and invokes the write() system call. Before the data is indeed written to the file, the Handler intercepts this system call and adds an additional file pointer movement prior to the writing of the data. Technically speaking, the Handler first moves the file pointer by an offset of +sizeof(header) and then starts writing. Doing so, the header cannot be overwritten by an attacker as long as the Handler in the framework of this embodiment is in its original version and not modified.

The previous explanations show that an existing header cannot be overwritten, but unfortunately this is not the only way for an attacker to replace the header by another one. Under the assumption that the DataHandler just implements container files, it could be relatively easy to create a new file that starts with the MagicNumber and arbitrary meta-information. After appending file content of another file to the new created file, the arbitrary meta-information belongs now to the just appended file content. In order to prevent such an attack, the DataHandler according to one embodiment uses cryptographic means to protect the header of such a container file. The DataHandler for that purpose may comprise an encryption/decryption mechanism and the necessary key or keys to encrypt/decrypt the header.

### Reading and Writing Filecontent of a Container File

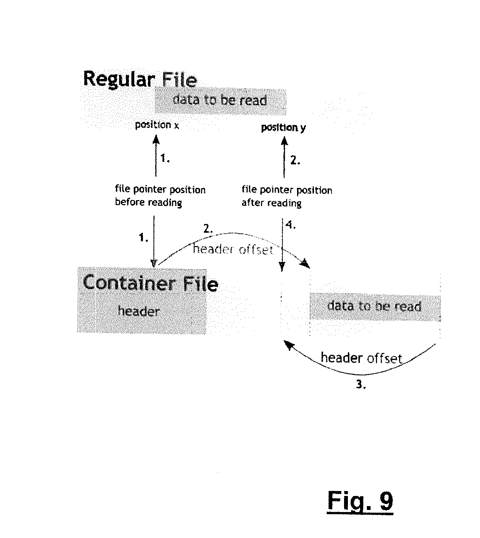

The header at the beginning of each container file just requires two additional operations. A concrete example in Fig. 9 shows the difference between a regular file and a container file. Using a regular file, the file pointer is located at the absolute position x and the application is asked to read y-x bytes. At the end of the reading the file pointer is located at the absolute position y. Now there is considered the case of a container file. Before the read operation takes place, the file pointer is at the same position x as it was in the regular file. This is a design decision to guarantee as much transparency as possible. Before the data can be read, the file pointer is moved by an offset of +sizeof(header) and set back by this size after the reading has taken place. This behaviour allows the following possibilities:
1. At the beginning of the file, a protected area can be placed that cannot be read or written by normal read or write operations as long as the application is monitored by the framework of an embodiment of the invention.
2. Before a read or write operation, the file pointer location is identical in both cases, independent if the application operates on a regular file or on a container file.

### Setting the Header

In one embodiment it is guaranteed that the header still can be read and written. This feature can be achieved relatively easily because in one embodiment the Handler of the framework has the responsibility for moving the file pointer, The embodiment always checks after an open() system call if the header exists. The Handler can do that by moving the file pointer to the absolute position 0 of the file and read sizeof(header) bytes. If the MagicNumber is correct, the Handler assumes the existence of the header, if the MagicNumber is missing or incorrect, it will ask the user for the metadata and start writing them at position 0.

### Modifying the Header

Because the application is not aware that it operates on a container file, the DataHandler is the only one who should modify the header. The DataHandler is responsible for moving the file pointer in case of a read or write operation. Therefore in one embodiment there can be provided another function to the DataHandler that modifies the header. This is possible because the DataHandler knows about a leading header at position 0 of a container file.

### Defining a File as a Container File

In one embodiment there is defined whether, whenever an application opens a new file, should this file be a container file or a regular one. This question in one embodiment is solved trivially by providing a predefined list of container filenames because one may assume that another part of the system is responsible for answering this question. The list of container filenames consists of struct fd_table_entry elements that defines a mapping *filename* -> *{true, false}*. Whenever a file is opened, the Handler uses this list to determine if the file is a container file or a regular one. Depending on this decision, the Handler knows how to correctly handle the system calls.

```
 struct fd_table_entry {
        char * filename;
        enum boolean monitored;
 } ;
```

However, other embodiments may use different identification mechanisms to identify whether a file is a container file or not and then based thereon the handling of the file is decided, i.e. whether it is treated as "normal" file or as a "container file" by using the interceptor. One embodiment could e.g. use a magic number at the beginning of the file, or some special format of the file or any identifier which identifies the file as a container file.

### Attack Scenarios

The following scenario shows that there is a simple attack scenario for the current DataHandler that implements container files and encryption. The attack allows to exchange the file content of a container file and therefore replace the policy of a file, as long as the application can write the file content area of a container file. The sequence of needed tasks is very simple.
1. Open file 'A' with file content 'a' and policy 'Aa'.
2. Open file 'B' with file content 'b' and policy 'Bb'.
3. Read file content 'a'.
4. Write file content 'a' into file 'B'.

Now file 'B' stores the file content 'a' but the header of the container file contains policy 'Bb'. Therefore an attacker can easily replace the policy of a file. One possible solution for this problem is the usage of a so called 'finalize flag' and a checksum in the header. If such a flag is set to true any read access to the file is only granted if the checksum in the header corresponds with the file content area of the container file. Any write access is always denied if the finalize flag is set. If the finalize flag is not set, both read and write accesses are permitted.

It will be understood by the skilled person that the embodiments described hereinbefore may be implemented by hardware, by software, or by a combination of software and hardware. The modules and functions described in connection with embodiments of the invention may be as a whole or in part implemented by microprocessors or computers which are suitably programmed such as to act in accordance with the methods explained in connection with embodiments of the invention. An apparatus implementing an embodiment of the invention may e.g. comprise a computer or a node or element in a network which is suitably programmed such that it is able to carry out a mechanism as described in the embodiments of the invention.

According to an embodiment of the invention there is provided a computer program, either stored in a data carrier or in some other way embodied by some physical means such as a recording medium or a transmission link which when being executed on a computer enables the computer to operate in accordance with the embodiments of the invention described hereinbefore.

## Claims

1. A computer-implemented method for performing an operation on a file by an application program running on an operating system, wherein said file comprises a header where meta-information is stored and the actual file content, said method comprising:
calling a system call of said operating system by said application program to access said file;
intercepting said system call by an intercepting module;
reading the meta-information of said header by said intercepting module;
based on said meta-information, deciding whether said execution of said system call on said file is allowed or denied, and
if said determination results in said system call being allowed, moving the file pointer of the file to be accessed by an amount corresponding to said header so that the system call is executed on the actual file content.

2. The method of claim 1, wherein meta-information contains information about a policy which should be enforced when accessing the file, wherein said policy may comprise one or more of the following:
a definition of one or more conditions under which the file may be accessed by the system call in an unmodified way;
a definition of one or more conditions under which the file may not be accessed by the system call; and/or
a definition of one or more conditions under which the file may be accessed only in a modified manner.

3. The method of claim 1 or 2, wherein the execution of the system call is performed in a modified manner, wherein said modified execution comprises to encrypt or to decrypt the actual file content.

4. The method of one of the preceding claims, wherein said decision whether the execution of said system call is allowed or denied is not only based on said meta-information but also based on the kind of application program or application process from which the system call originated.

5. The method of one of the preceding claims, wherein said file comprises as actual file content encrypted data, and wherein said meta-information comprises usage control policy defining one or more conditions under which said encrypted data is allowed to be decrypted.

6. The method of one of the preceding claims, wherein said meta-information comprises one or more cryptographic keys for decrypting said encrypted data or information based on which said one or more keys for decrypting said encrypted data can be derived.

7. The method of one of the preceding claims, wherein said meta-information is stored in encrypted form.

8. The method of claim 7, wherein said intercepting module is capable of decrypting the encrypted meta-information.

9. The method of one of the preceding claims, wherein said file contains information which identifies it as being a file which comprises said header with meta-information in addition to its actual file content.

10. A computer-implemented method for performing a write operation to create a file by an application program running on an operating system, wherein said file comprises a header where meta-information is stored and the actual file content, said method comprising:
calling a system call of said operating system by said application program to create said file by writing its data into a storage;
intercepting said system call by an intercepting module;
writing the meta-information of said header by said intercepting module into said storage to thereby enable said intercepting module to decide based on said meta-information in case of a later system call on said file whether said execution of said system call on said file is allowed or denied, and
moving the file pointer of the file to be written by an amount corresponding to said header so that the write operation of said actual file content is performed in said file after said header.

11. The method of claim 10, further comprising one or more of the features as defined in one of claims 2 to 9.

12. An apparatus for performing an operation on a file by an application program running on an operating system, wherein said file comprises a header where meta-information is stored and the actual file content, said apparatus comprising:
a module for receiving system call of said operating system from said application program to access said file;
a module for intercepting said system call by an intercepting module;
a module for reading the meta-information of said header by said intercepting module;
a module for, based on said meta-information, deciding whether said execution of said system call on said file is allowed or denied, and for
if said determination results in said system call being allowed, moving the file pointer of the file to be accessed by an amount corresponding to said header so that the system call is executed on the actual file content.

13. An apparatus for performing a write operation to create a file by an application program running on an operating system, wherein said file comprises a header where meta-information is stored and the actual file content, said apparatus comprising:
a module for receiving a system call of said operating system from said application program to create said file by writing its data into a storage;
a module for intercepting said system call by an intercepting module;
a module for writing the meta-information of said header by said intercepting module into said storage to thereby enable said intercepting module to decide based on said meta-information in case of a later system call on said file whether said execution of said system call on said file is allowed or denied, and for
moving the file pointer of the file to be written by an amount corresponding to said header so that the write operation of said actual file content is performed in said file after said header.

14. The apparatus of claim 12 or 13, further comprising:
a module for carrying out the additional operations as defined in one of claims 2 to 9.

15. A computer program comprising computer program code which when being executed on a computer enables said computer to carry out a method according to one of claims 1 to 11.
